(19) Europäisches Patentamt
European Patent Office
Office européen des brevets

(11) Veröffentlichungsnummer : **0 073 998**
**B1**

(12) # EUROPÄISCHE PATENTSCHRIFT

(45) Veröffentlichungstag der Patentschrift : **09.10.85**

(21) Anmeldenummer : **82107680.9**

(22) Anmeldetag : **23.08.82**

(51) Int. Cl.⁴ : **C 09 B 45/14**// D06P1/10

(54) **Metallkomplexfarbstoffe.**

(30) Priorität : **03.09.81 DE 3134944**

(43) Veröffentlichungstag der Anmeldung : **16.03.83 Patentblatt 83/11**

(45) Bekanntmachung des Hinweises auf die Patenterteilung : **09.10.85 Patentblatt 85/41**

(84) Benannte Vertragsstaaten : **CH DE FR GB LI**

(56) Entgegenhaltungen :
**DE-A- 2 401 087**
**US-A- 2 233 873**
**US-A- 2 282 379**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Mennicke, Winfried, Dr.**
**Steglitzerstrasse 8**
**D-5090 Leverkusen 1 (DE)**
Erfinder : **Fürstenwerth, Hauke, Dr.**
**Morgengraben 3**
**D-5000 Köln 80 (DE)**

**EP 0 073 998 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Kobalt-, Chrom-, Eisen-, Kupfer- oder Nickelkomplexe von Azofarbstoffen, die in einer ihrer tautomeren Formen der Formel

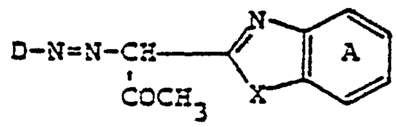

(I)

entsprechen,
worin

D den Rest einer Diazokomponente der Benzol- oder Naphthalinreihe bedeutet, die ggf. durch Alkyl, Alkoxy, Halogen, $NO_2$, COOR, $CONR_2$, CN, $SO_3N$, $SO_2NR_2$, Alkylsulfonyl oder Arylsulfonyl substituiert ist, und die eine metallkomplexbildende Gruppe in Nachbarstellung zur Azogruppe aufweist,

X Sauerstoff, Schwefel oder den Rest NR,

R Wasserstoff, Alkyl, Aryl, Aralkyl, Cycloalkyl bedeuten und der Ring

A in der Chemie der Azofarbstoffe übliche Substituenten enthalten kann ; insbesondere die 1 : 1-Cu- und Ni-Komplex von (I) sowie die 1 : 2-Cr ; Co- und Fe-Komplexe auf Basis eines oder zweier Farbstoffe (I).

Geeignete Substituenten in A sind beispielsweise : Alkyl, Alkoxy, Halogen, $NO_2$, SCN, COOR, $CONR_2$, CN, $SO_3H$, $SO_2NR_2$, Alkylsulfonyl oder Arylsulfonyl.

Geeignete, im beliebigen Zusammenhang genannte Alkyl- und Alkoxygruppen sind solche mit 1-4 C-Atomen, die vorzugsweise nicht weiter substituiert sind. Besonders bevorzugt sind Methyl, Ethyl bzw. Methoxy und Ethoxy.

Geeignete Arylreste sind insbesondere gegebenenfalls substituierte Phenylreste mit Substituenten wie Halogen, insbesondere Cl und Br, $NO_2$, $C_1$-$C_4$-Alkoxy, $C_1$-$C_4$-Alkyl.

Geeignete Aralkylreste sind Benzyl und Phenylethyl.

Geeignete Cycloalkylreste sind Cyclohexyl und Methylcyclohexyl.

Unter « Halogen » wird F, Br und vor allem Cl verstanden.

Geeignete Reste D sind insbesondere solche der Benzol- und Naphthalinreihe, die vorzugsweise ortho-ständig zur Azobrücke eine zur Komplexbildung geeignete COOH- oder OH-Gruppe aufweisen.

Bevorzugte Farbstoffe der Formel I sind Metallkomplexfarbstoff von Monoazoverbindungen der Formel

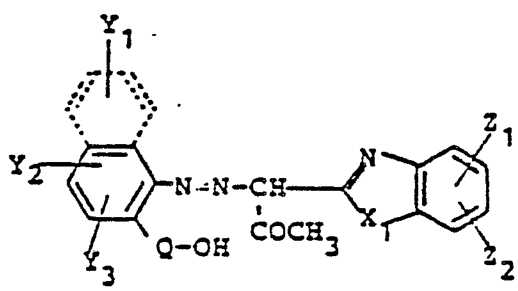

(II)

worin

$X_1$ Schwefel oder NR',

Q CO oder eine direkte Bindung,

$Y_1$ Wasserstoff, Chlor, $NO_2$ oder $SO_3H$,

$Y_2$ Wasserstoff, Nitro oder Chlor,

$Y_3$ Wasserstoff, Nitro, Chlor, Alkyl, Alkoxy, $SO_3H$, Alkylsulfonyl, Arylsulfonyl oder $SO_2NW_1W_2$,

$W_1$ und $W_2$ Wasserstoff oder Alkyl,

$Z_1$ Wasserstoff, Alkyl, Alkoxy, Cl, Br, $NO_2$, SCN, CN, $SO_3H$, Alkylsulfonyl, Arylsulfonyl, $SO_2NW_1W_2$ oder $COOW_1$,

$Z_2$ Wasserstoff, Alkyl, Alkoxy, Cl oder Br und

R' Wasserstoff, Alkyl, Aralkyl oder Aryl bedeuten.

Besonders bevorzugt sind die Metallkomplexe, insbesondere die Kobaltkomplexe von Azoverbindungen der Formel II, worin

$X_1$ Schwefel,

Q CO oder direkte Bindung,

$Y_1$ Wasserstoff, $NO_2$ oder $SO_3H$,

$Y_2$ Wasserstoff, $NO_2$ oder Cl,

$Y_3$ Wasserstoff, $NO_2$, Cl, $CH_3$, $OCH_3$, $SO_3H$, $C_1$-$C_2$-Alkylsulfonyl oder $SO_2NW_1'W_2'$,
$W_1'/W_2'$Wasserstoff oder $C_1$-$C_2$-Alkyl,
$Z_1$ Wasserstoff, $CH_3$, $OCH_3$, Cl, Br, $NO_2$, SCN, $SO_3H$, $C_1$-$C_2$-Alkylsulfonyl oder COO-$C_1$-$C_2$-Alkyl,
$Z_2$ Wasserstoff, $CH_3$, Cl oder Br bedeuten,
mit der Maßgabe, daß Y und Z nicht gleichzeitig für Nitro stehen.

Bevorzugte Farbstoffe sind weiterhin Metallmischkomplexe auf der Basis von Azofarbstoffen der Formel II und Azofarbstoffen der Formel III

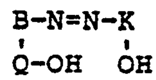

(III)

worin

B der Rest einer Diazokomponente insbesondere der Benzol- oder Naphthalinreihe, und

K eine von der oben verwendeten Kupplungskomponente verschiedene Kupplungskomponente, insbesondere eine derartige Komponente der Acetessigsäurearylid-, Pyrazol, 6-Hydroxy-2-pyridon- und Naphtholreihe bedeuten,
wobei sich der wie oben definierte Rest Q-OH und die OH-Gruppe in K in Nachbar-Position zur Azobrücke befinden.

Bevorzugte Mischkomplexe sind solche der Formel

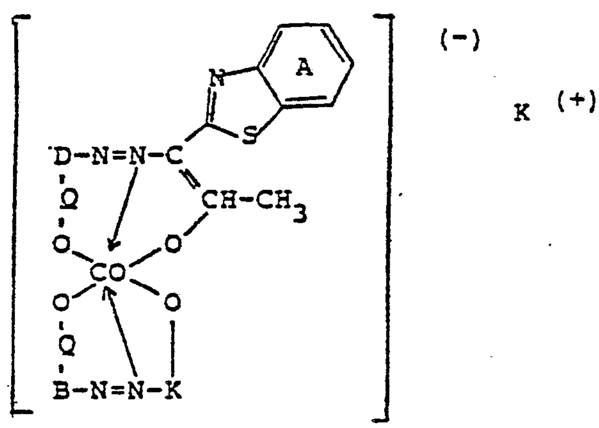

(IV)

worin A, B, D, K und Q die obengenannten allgemeinen und speziellen Bedeutungen haben, und $K^{(+)}$ H ein Kation, vorzugsweise ein Alkali-, Ammonium- oder Niederalkylammonium-Kation bedeutet.

Ganz besonders bevorzugt sind Farbstoffe der Formeln I-IV, worin X = S und der Ring A nicht weiter substituiert ist.

Die Farbstoffe der Formeln I bzw. II erhält man, indem man entsprechende Diazokomponenten in an sich bekannter Weise auf Kupplungskomponenten der Formel

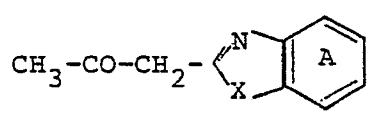

(V)

kuppelt und anschließend den dabei erhaltenen
haltenen Monoazofarbstoff in ebenfalls an sich bekannter Weise metallisiert.

Die Verbindungen der Formel V sind bekannt bzw. nach an sich bekannten Methoden zugänglich (vgl. DE-OS-2 137 372 sowie J. Chem. Soc. *1948,* 303 und J. Ind. Chem. Soc. *1977,* 921), indem man Verbindungen der Formel

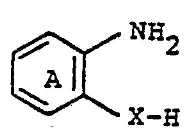

(VI)

mit Acetessigester bzw. — im Falle von X = O — zweckmäßigerweise mit dem Iminoether

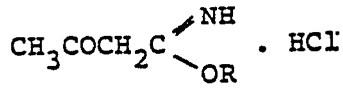

umsetzt.

Auch die Herstellung der Mischkomplexe erfolgt nach an sich bekannten Methoden, indem man beispielsweise Farbstoffe der Formel I mit einer ortho-ständigen Q-OH-Gruppe in 1 : 1-Metallkomplexe überführt und diese dann durch Umsetzung mit einem metallfreien Farbstoff der Formel III in den entsprechenden Mischkomplex umwandelt.

Geeignete Diazoverbindungen der Formel D-$NH_2$ sind beispielsweise :

2-Aminobenzoesäure,
2-Aminobenzoesäure-4- oder -5-sulfonsäure,
2-Aminobenzoesäure-4- oder -5-sulfonamid,
4-, 5- oder 6-Chlor-2-aminobenzoesäure,
4-oder 5-Nitro-2-aminobenzoesäure,
2-Amino-1-hydroxybenzol,
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor- und 4-Methyl- und 4-Acetamino-6-nitro-2-amino-1-hydroxybenzol,
1-hydroxybenzol,
6-Methyl- und 6-Acetamino- und 6-Chlor-4-nitro-2-amino-1-hydroxybenzol,
6-Acetamino-4-chlor-2-amino-1-hydroxybenzol,
4-Chlor-5-nitro-2-amino-1-hydroxybenzol,
4- oder 5-Methyl-2-amino-1-hydroxybenzol,
4-Methoxy-2-amino-1-hydroxybenzol,
2-Amino-1-hydroxybenzol-4- oder -5-methylsulfon,
2-Amino-1-hydroxybenzol-4- oder -5-phenylsulfon,
2-Amino-1-hydroxybenzol-4- oder -5-sulfonamid,
2-Amino-1-hydroxybenzol-4- oder -5-sulfanilid,
4-Nitro-2-amino-1-hydroxybenzol-5- oder -6-sulfonamid,
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,
1-Amino-2-hydroxynaphthalin-4-sulfonsäure,
6-Nitro-1-amino-2-hydroxynaphthalin-4-sulfonsäure.

Als Kupplungskomponenten der Formel (V) kommen beispielsweise in Betracht :

2-Acetonylbenzthiazol,
6-Methyl-, 6-Methoxy-, 6-Ethoxy-, 6-Nitro-, 6-Rhodano-, 6-Chlor-, 6-Carbonsäure-, 6-Carbonsäureamid-, 6-Sulfonsäure-, 6-Sulfonsäureamid-, 6-Methylsulfonyl- und 6-Ethylsulfonyl-2-acetonylbenzthiazol,
5,6-Dichlor- und 5,6-Dibrom-2-acetonylbenzthiazol,
4-Sulfonsäure-6-methyl- und -6-chlor-2-acetonylbenzthiazol,
4-Nitro-6-(2′-hydroxyethylsulfon)-2-acetonylbenzthiazol,
2-Acetonylbenzimidazol,
1-N-Methyl-, 1-N-Benzyl- und 1-N-Phenyl-2-acetonylbenzimidazol,
5-Methyl-, 5-Methoxy-, 5-Ethoxy-, 5-Chlor-, 5-Nitro-,
5-Carbonsäure- und 5-Carbonsäureamid-2-acetonylbenzimidazol,
Gemisch aus 4- und 5-Methyl-2-acetonylbenzimidazol,
4,5-Dimethyl- und 5,6-Dimethyl-2-acetonylbenzimidazol,
6-Sulfonsäure-, 6-Carbonsäure-, 6-Sulfonamid-, 6-Diethylsulfonamid-, 6-Phenylsulfonamid- und 6-Ethyl-sulfonyl-1-N-Phenyl-2-acetonylbenzimidazol.

Die Metallisierung erfolgt in an sich bekannter Weise (vgl. beispielsweise K. Vankataraman, The Chemistry of Synthetic Dyes, Band III (1970, S. 334-343) in wäßrigem oder wäßrig-organischem Milieu bei Temperaturen von 20-100 °C, vorzugsweise bei 70-100 °C, unter Normaldruck bei einem pH von 3-12, vorzugsweise 4-10. Als Lösungsmittel können niedere Alkohole wie Ethanol, Carbonamide wie Formamid oder Dimethylformamid, Ethylenglykol oder dessen Mono-$C_1$-$C_4$-Alkylether zugesetzt werden.

Geeignete metallabgebende Mittel sind hauptsächlich die Chrom-, Eisen-, Kobalt-, Kupfer- und Nickelsalze von anorganischen oder organischen Säuren, wie beispielsweise Chromtrioxid, Chromfluorid, Chromchlorid, Chromsulfat, Chromformiat, basisches Chromacetat, Kalium- oder Ammoniumchromsulfat, Chromsalicylsäure, Natrium- oder Kaliumchromat bzw. -bichromat, Eisen-II- oder Eisen-III-chlorid, -sulfat oder -nitrat, Kobalt-Weinsäure-Komplex, Kobalt-acetat, -chlorid oder -sulfat, Kupfertetramin-Komplex, Kupfercarbonat, -sulfat, -chlorid oder -acetat, Nickelchlorid, -sulfat, -acetat oder -formiat.

Die Metallisierung findet vorzugsweise in Anwesenheit von Säureakzeptoren statt, beispielsweise von Carbonaten, Hydrogencarbonaten, Oxiden und Hydroxiden von Alkali- und Erdalkalimetallen, wie $Li_2CO_3$, $Na_2CO_3$, $K_2CO_3$, $LiHCO_3$, $NaHCO_3$, $KHCO_3$, LiOH, NaOH, KOH, MgO oder CaO oder von alkalisch wirkenden Salzen von Alkalimetallen, wie Natrium- oder Kaliumacetat, oder von Ammoniak oder niederalkylsubstituiertem Ammoniak oder Tetraniederalkylammoniumhydroxiden. Die Säuregruppen der erfindungsgemäßen Metallkomplexfarbstoffe liegen vorzugsweise in Form von Salzen vor und zwar entsprechend den eingesetzten Säureakzeptoren vor allem in Form der Lithium-, Natrium-, Kalium-, Ammonium- oder Niederalkylammonium-Salze.

Die Kupfer- und Nickelkomplexe entstehen als 1 : 1-Komplexe und die Chrom-, Kobalt- und Eisenkomplexe unter den hier genannten Bedingungen üblicherweise als 1 : 2-Komplexe.

Die so hergestellten Metallkomplexverbindungen, denen die Monoazofarbstoffe der Formel (I) oder (I) und (III) zugrundeliegen, können durch Ansäuern, Aussalzen mit Alkalisalzen oder Eindampfen isoliert und mit den üblichen Hilfs- und Stellmitteln zu wasserlöslichen Präparationen verarbeitet werden, sei es zu Pulvern, zu Granulaten mit einer Korngröße von mindestens 20 µ oder zu kaltwasserlöslichen und kaltdispergierbaren Zubereitungen.

Die Zubereitung zu flüssigen Präparationen unter Verwendung von organischen Lösungsmitteln gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der erfindungsgemäßen Metallkomplexverbindungen oder nur die letzte Stufe dieser Synthese und die Herstellung der flüssigen Präparationen in einem Topf ohne Zwischenisolierung vollziehen kann.

Besonders vorteilhaft ist das Verfahren der Deutschen Offenlegungsschrift 2 443 483, bei dem man u. a. den metallfreien Farbstoff in Gegenwart von alkalisch wirkenden Lithiumsalzen in Lösungsmitteln metalliert und dabei gleichzeitig lagerstabile konzentrierte Farbstofflösungen erhält.

Die neuen Metallkomplexfarbstoffe eignen sich zum Färben und Bedrucken der verschiedensten Stoffe, vor allem zum Färben von natürlichen oder synthetischen amidgruppenhaltigen Materialien, wie Wolle, Seide, Leder, Polyamid- und Polyurethanfaser. Sie sind vor allem zum Färben von schwach alkalischem, neutralem oder schwach saurem, z. B. essigsaurem Bade geeignet, wobei man gleichmäßige Färbungen erhält mit guten Licht- und Gebrauchsechtheiten. Die flüssigen Farbstoffzubereitungen eignen sich auch zum Sprühfärben von Leder und zum Färben von Leder im Faß. Sie eignen sich besonders zum Färben von Leder auf Durchlauf-Mehrzweckmaschinen beispielsweise vom Typ MULTIMA, ein Verfahren bei dem sich die erfindungsgemäßen Metallkomplexfarbstoffe durch ein gutes Durchfärbevermögen, eine gute Bindung zum Substrat und eine gute Wassertropfenechtheit auszeichnen.

## Beispiel 1

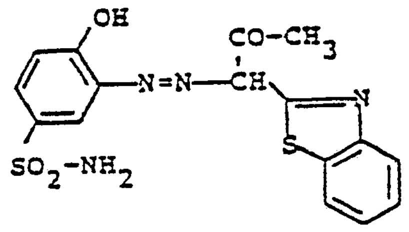

20,4 g 2-Amino-1-hydroxybenzol-4-sulfonamid werden in 100 ml Wasser suspendiert. Man setzt 20 ml 30 %ige Salzsäure zu, kühlt durch Einwerfen von 100 g Eis auf 0 °C und diszotiert im Verlauf von 30 Minuten mit 23 ml 4,35 n Natriumnitritlösung. Man rührt 15 Minuten nach und zerstört überschüssige salpetrige Säure mit Amidosulfonsäure. Mittlerweile wurden 19,1 g 2-Acetonylbenzthiazol durch leichtes Erwärmen in 50 ml Ethylen-glykolmonoethylether gelöst und auf ein Gemisch von 200 ml Wasser, 14 ml 40 %iger Natronlauge und 200 g Eis ausgetragen. Man fügt die Diazotierung portionsweise zu, setzt 15 g $Na_2Co_3$ nach und rührt das Gemisch zwei Stunden bei pH 9-9,5, bis die Kupplungsreaktion beendet ist.

1 : 2-Kobaltkomplex

Das fertige Gemisch wird mit 14,1 g $CoSO_4 \cdot 7\ H_2O$ und 11 g $Na_2CO_3$ versetzt und auf 70 °C erwärmt. Eine halbe Stunde später läßt sich kein Ausgangsfarbstoff mehr nachweisen. Durch Eindunsten auf dem Wasserbad erhält man ein braunes Pulver, das Wolle, Polyamid und Leder in leicht rötlich hellbraunen Tönen mit guten Licht- und Naßechtheiten färbt.

(Siehe Beispiel 2 Seite 6 f.)

Beispiel 2

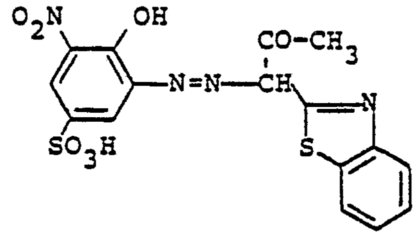

Unter ähnlichen Bedingungen wie in Beispiel 1 werden aus 23,4 g 6-Nitro-2-amino-1-hydroxybenzol-4-sulfonsäure und 19,1 g 2-Acetonylbenzthiazol der Monoazofarbstoff hergestellt.

1 : 2-Kobaltkomplex

Beim Erwärmen mit 14,1 g $CoSO_4 \cdot 7\ H_2O$ bei pH 8,5-9 entsteht der Kobaltkomplex, der beim Sprühtrocknen ein dunkelbraunes Pulver liefert. Es färbt Wolle, Polyamid und Leder in blaustichig rotbraunen Nuancen.

1 : 2-Eisenkomplex

Dreistündiges Erwärmen mit 16 g $FeCl_3 \cdot 6\ H_2O$ bei 80 °C und pH 5-6 und Eindunsten auf dem Wasserbad ergeben ein braunes Pulver, das Leder in gedeckten gelbbraunen Nuancen färbt.

1 : 2-Chromkomplex

Fünfstündiges Erhitzen unter Rückfluß mit 40 g einer wäßrigen Lösung von basischem Chromacetat (10,5 Gew.-% $Cr_2O_3$) bei pH 5-6 ergibt den 1 : 2-Chromkomplex, der Wolle und Polyamid in bordofarbenen Tönen färbt.

1 : 1-Kupferkomplex

Der nach Neutralisieren mit Essigsäure und Erwärmen mit 20 g Cu $(CH_3COO)_2 \cdot H_2O$ bei 80 °C erhaltene Kupfer-1 : 1-Komplex gibt auf Wolle und Polyamid klare rotbraune, kupferfarbene Färbungen.

1 : 1-Nickelkomplex

Zweistündiges Metallisieren mit 24,9 g Ni $(CH_3COO)_2 \cdot 4H_2O$ bei 80 °C und pH 5-6 führen zu einem Nickel-1 : 1-Komplex, der Leder in hellen rostbraunen Tönen färbt.

Beispiel 3

Durch Umsetzung der entsprechenden diazotierten Aryl-aminen mit 2-Acetonylbenzthiazol gelangt man zu den folgenden Monoazofarbstoffen :

$A^1$ =

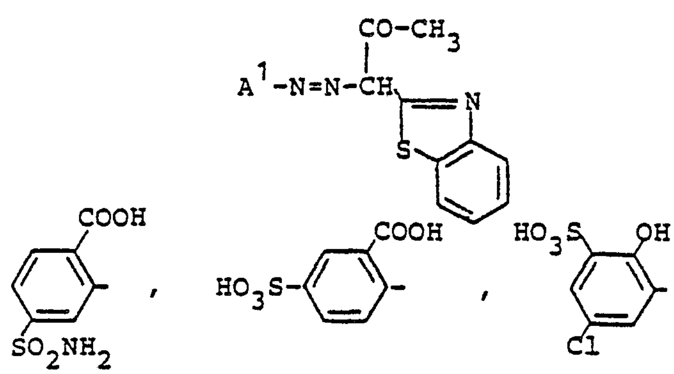

, ,

1 2 3

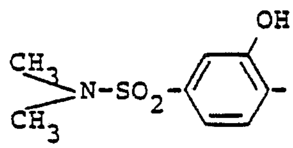

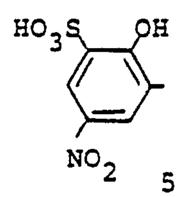

4 5

(Fortsetzung)

Gemisch aus 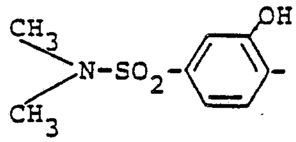 + 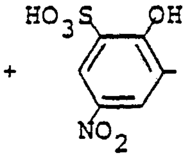

6

Gemisch aus 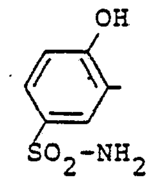 + 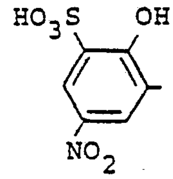

7

Ihre Kobaltkomplexe sind, auf Leder gefärbt, meist rotstichig braun. Die Kupfer- und Nickelkomplexe sind klarer, weniger braun, die Chromkomplexe rot bis violettblau und die Eisenkomplexe blaßbraun.

Beispiel 4

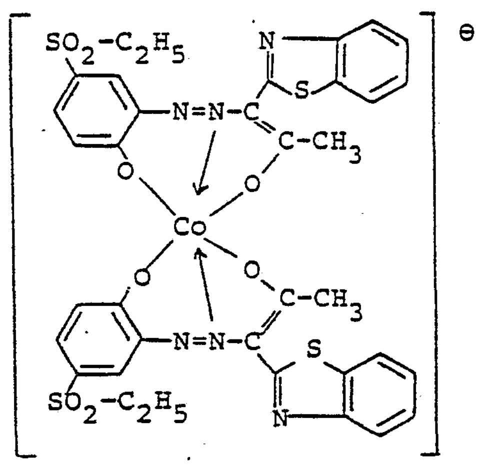

$Li^{\oplus}$

Das aus salzsaurer Lösung abgepreßte Kupplungsprodukt aus 20,1 g diazotiertem 4-Ethylsulfonyl-2-amino-1-hydroxybenzol und 19,1 g 2-Acetonyl-benzthiazol wird als feuchte Paste in 400 ml Ethylenglykolmonoethylether verrührt. Beim Neutralisieren mit ca. 8 g LiOH · $H_2O$ entsteht nahezu eine Lösung. Man fügt 14,1 g $CoSO_4 \cdot 7H_2O$ zu, erwärmt das Gemisch auf 80 °C und hält dabei den pH durch Zugabe von 6-8 g LiOH · $H_2O$ bei 8,5-9. Die Kobaltierung ist nach kurzer Zeit beendet. Nach Abkühlen auf Raumtemperatur trennt man die unlöslichen Elektrolyte durch Filtration ab und erhält als Filtrat eine tiefbraune, lagerstabile konzentrierte Farbstofflösung. Mit ihr erzielt man auf Durchlauf-Mehrzweckmaschinen schwach rotstichig, hellbraune Lederfärbungen mit guter Licht- und Wassertropfenechtheit.

Auf ähnliche Weise lassen sich die folgenden Monoazofarbstoffe in die braunen, konzentrierten und lagerstabilen Lösungen ihrer Kobaltkomplexe überführen. Sie eignen sich vor allem zum Sprühfärben von Leder.

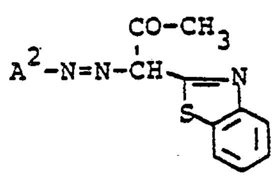

$A^2$- = 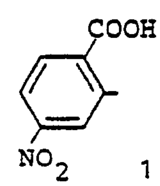 1 , 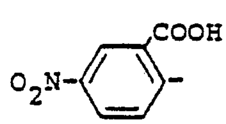 2 , 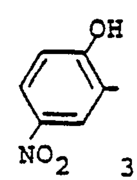 3

(Fortsetzung)

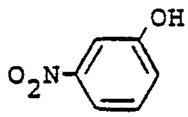 , 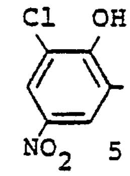 , 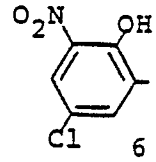 ,

4 5 6

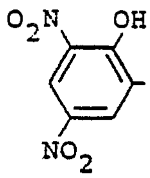 , 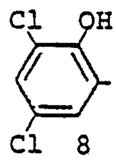 , 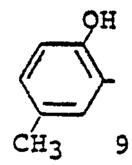 ,

7 8 9

Gemisch aus 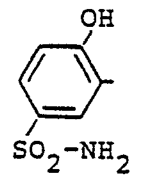 + 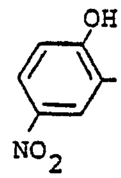

10

## Beispiel 5

Die sauren Pasten von je 0,1 Mol der beiden Monoazofarbstoffen der Formel

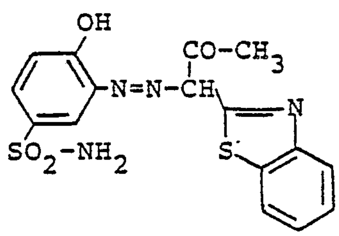 + 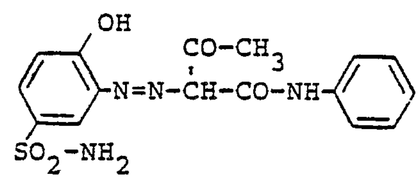

lassen sich wie in Beispiel 4 in 600 ml Ethylenglykolmonoethylether mit $CoSO_4 \cdot 7H_2O$ und Lithiumhydroxid metallisieren. Das braune Filtrat liefert bei der Faßfärbung oder Färbung auf Durchlauf-Mehrzweckmaschinen gelbstichige hellbraune Lederfärbungen in guten Echtheiten.

## Beispiel 6

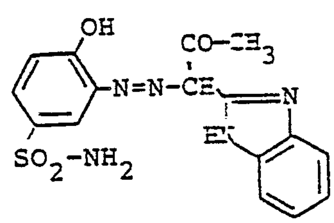

17,4 g 2-Acetonylbenzimidazol werden in 100 ml Wasser und 10 ml 30 %iger Salzsäure gelöst. Die Lösung wird in Gegenwart eines Emulgators auf ein Gemisch von 200 ml Wasser, 200 g Eis und 14 ml 40 %iger Natronlauge ausgetragen. Die sich bildende feinverteilte Suspension wird mit 20,4 g diazotiertem 2-Amino-1-hydroxybenzol-4-sulfonamid bei pH 9-10 angekuppelt. Man rührt das Gemisch über Nacht und erwärmt am nächsten Morgen mit 14,1 g $CoSO_4{\cdot}7H_2O$ und 10 g $Na_2CO_3$ drei Stunden auf 80 °C. Das durch Eintrocknen erhältliche dunkelbraune Pulver färbt Wolle, Polyamid und Leder in etwas weniger rotstichig braunen Tönen als der Kobaltkomplex des Beispiels 1.

**Patentansprüche**

1. Kobalt-, Chrom-, Eisen-, Kupfer- und Nickelkomplexe von Azofarbstoffen, die in einer ihrer tautomeren Formen der Formel

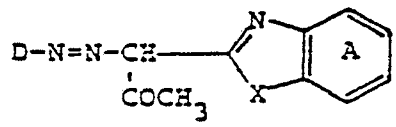

entsprechen,
worin

D den Rest einer Diazokomponente der Benzol-, oder Naphthalinreihe bedeutet, die ggf. durch Alkyl, Alkoxy, Halogen, $NO_2$, COOR, $CONR_2$, CN, $SO_3H$, $SO_2NR_2$, Alkylsulfonyl oder Arylsulfonyl substituiert ist, und die eine metallkomplexbildende Gruppe in Nachbarstellung zur Azogruppe aufweist,

X Sauerstoff, Schwefel oder den Rest NR,

R Wasserstoff, Alkyl, Aryl, Aralkyl, Cycloalkyl bedeuten und der Ring

A in der Chemie der Azofarbstoffe übliche Substituenten enthalten kann.

2. Azofarbstoffe gemäß Anspruch 1, mit D Rest der Benzol- oder Naphthalinreihe.

3. Metallkomplex von Azofarbstoffen gemäß Anspruch 1 der Formel

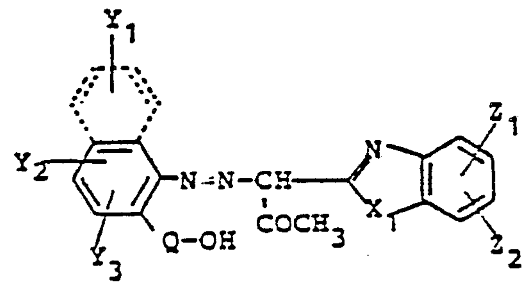

worin

$X_1$ Schwefel oder NR',

Q CO oder eine direkte Bindung,

$Y_1$ Wasserstoff, Chlor, $NO_2$ oder $SO_3H$,

$Y_2$ Wasserstoff, Nitro oder Chlor,

$Y_3$ Wasserstoff, Nitro, Chlor, Alkyl, Alkoxy, $SO_3H$, Alkylsulfonyl, Arylsulfonyl, oder $SO_2NW_1W_2$,

$W_1$ und $W_2$ Wasserstoff oder Alkyl,

$Z_1$ Wasserstoff, Alkyl, Alkoxy, Cl, Br, $NO_2$, SCN, $SO_3H$, CN, Alkylsulfonyl, Arylsulfonyl, $SO_2NW_1W_2$ oder $COOW_1$,

$Z_2$ Wasserstoff, Alkyl, Alkoxy, Cl oder Br und

R' Wasserstoff, Alkyl, Aralkyl oder Aryl bedeuten.

4. Metallkomplex von Azofarbstoffen gemäß Anspruch 3
worin

$X_1$ Schwefel,

Q CO oder direkte Bindung,

$Y_1$ Wasserstoff, $NO_2$ oder $SO_3H$,

$Y_2$ Wasserstoff, $NO_2$ oder Cl,

$Y_3$ Wasserstoff, $NO_2$, Cl, $CH_3$, $OCH_3$, $SO_3H$, $C_1$-$C_2$-Alkylsulfonyl oder $SO_2NW_1W_2'$,

$W_1'/W_2'$ Wasserstoff oder $C_1$-$C_4$-Alkyl,

$Z_1$ Wasserstoff, $CH_3$, $OCH_3$, Cl, Br, $NO_2$, SCN, $SO_3H$, $C_1$-$C_2$-Alkylsulfonyl oder COO-$C_1$-$C_2$-Alkyl,

$Z_2$ Wasserstoff, $CH_3$, Cl oder Br bedeuten,

mit der Maßgabe, daß $Y_1$-$Y_3$ und $Z_1$ nicht gleichzeitig für Nitro stehen.

5. Metallkomplex der Formel

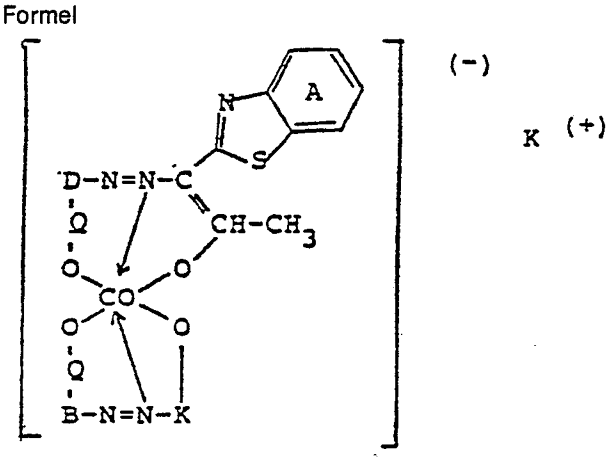

worin

A, D und Q die obengenannte Bedeutung haben,

$K^{(+)}$ ein Kation, vorzugsweise ein Alkali-, Ammonium- oder Niederalkylammonium-Kation,

B der Rest einer Diazokomponente insbesondere der Benzol- oder Naphthalinreihe, und

K eine von der oben verwendeten Kupplungskomponente verschiedene Kupplungskomponente, insbesondere eine derartige Komponente der Acetessigsäurearylid-, Pyrazol-, 6-Hydroxy-2-pyridon- und Naphtholreihe bedeuten,

wobei sich der Rest -Q-OH in ortho-Position zur Azobrücke befindet.

6. Metallkomplex des Azofarbstoffs der Formel

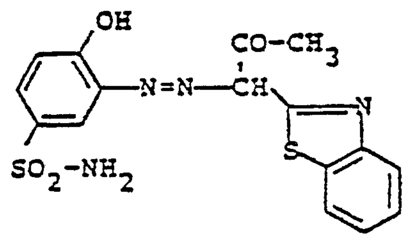

insbesondere dessen 1 : 2-Kobaltkomplex.

7. Verfahren zum Färben von amidgruppenhaltigen Materialien, dadurch gekennzeichnet, daß man Farbstoffe gemäß Anspruch 1 verwendet.

8. Mit den Farbstoffen der Ansprüche 1-6 gefärbten amidgruppenhaltigen Materialien.

**Claims**

1. Cobalt, chromium, iron, copper and nickel complexes of azo dyestuffs which, in one of their tautomeric forms, correspond to the formula

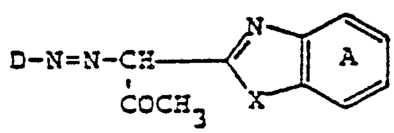

wherein

D denotes the radical of a diazo component of the benzene or naphthalene series, which is optionally substituted by alkyl, alkoxy, halogen, $NO_2$, COOR, $CONR_2$, CN, $SO_3H$, $SO_2NR_2$, alkylsulphonyl or arylsulphonyl and which contains a metal-complex-forming group in a position adjacent to the azo group,

X denotes oxygen, sulphur or the radical NR,

R denotes hydrogen, alkyl, aryl, aralkyl or cycloalkyl and the ring

A can contain substituents customary in the chemistry of azo dyestuffs.

2. Azo dyestuffs according to Claim 1 with D being a radical of the benzene or naphthalene series.

3. Metal complex of azo dyestuffs according to Claim 1, of the formula

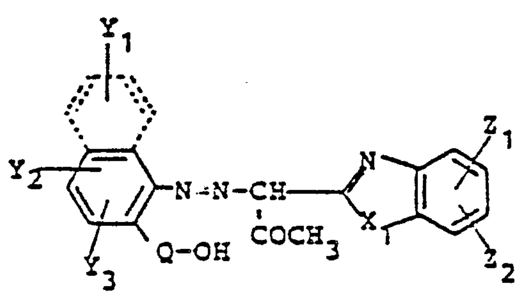

wherein

$X_1$ denotes sulphur or NR′,

Q denotes CO or a direct bond,

$Y_1$ denotes hydrogen, chlorine, $NO_2$ or $SO_3H$,

$Y_2$ denotes hydrogen, nitro or chlorine,

$Y_3$ denotes hydrogen, nitro, chlorine, alkyl, alkoxy, $SO_3H$, alkylsulphonyl, arylsulphonyl or $SO_2NW_1W_2$,

$W_1$ and $W_2$ denote hydrogen or alkyl,

$Z_1$ denotes hydrogen, alkyl, alkoxy, Cl, Br, $NO_2$, SCN, $SO_3H$, CN, alkylsulphonyl, arylsulphonyl, $SO_2NW_1W_2$ or $COOW_1$,

$Z_2$ denotes hydrogen, alkyl, alkoxy, Cl or Br and

R' denotes hydrogen, alkyl, aralkyl or aryl.

4. Metal complex of azo dyestuffs according to Claim 3, wherein

$X_1$ denotes sulphur,

Q denotes CO or a direct bond,

$Y_1$ denotes hydrogen, $NO_2$ or $SO_3H$,

$Y_2$ denotes hydrogen, $NO_2$ or Cl,

$Y_3$ denotes hydrogen, $NO_2$, Cl, $CH_3$, $OCH_3$, $SO_3H$, $C_1$-$C_2$-alkylsulphonyl or $SO_2NW_1'W_2'$, $W_1'/W_2'$ denote hydrogen or $C_1$-$C_4$-alkyl,

$Z_1$ denotes hydrogen, $CH_3$, $OCH_3$, Cl, Br, $NO_2$, SCN, $SO_3H$, $C_1$-$C_2$-alkylsulphonyl or COO-$C_1$-$C_2$-alkyl, and

$Z_2$ denotes hydrogen, $CH_3$, Cl or Br, with the proviso that $Y_1$-$Y_3$ and $Z_1$ do not simultaneously represent nitro.

5. Metal complex of the formula

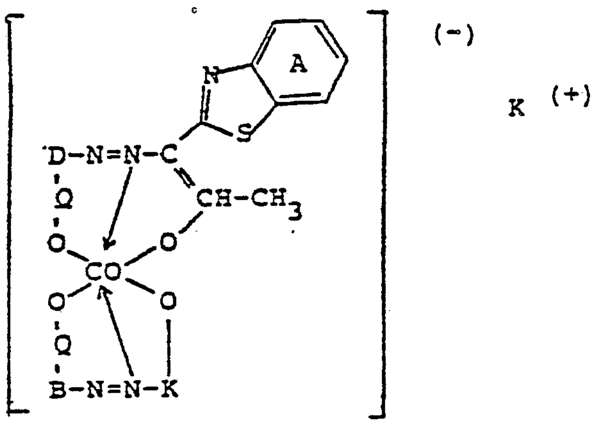

wherein

A, D and Q have the abovementioned meaning,

$K^{(+)}$ denotes a cation, preferably an alkali metal,

ammonium or (lower alkyl)-ammonium cation,

B denotes the radical of a diazo component, in particular of the benzene or naphthalene series, and

K denotes a coupling component which differs from the coupling component used above, in particular such a component of the acetoacetarylide, pyrazole, 6-hydroxy-2-pyridone and naphthol series, the radical -Q-OH being in the orthoposition relative to the azo bridge.

6. Metal complex of the azo dyestuff of the formula

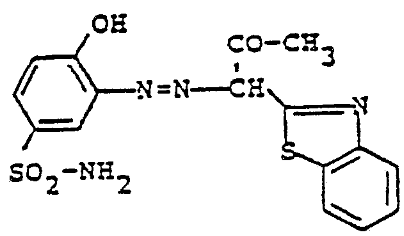

in particular its 1 : 2 cobalt complex.

7. Process for dyeing materials containing amide groups, characterised in that dyestuffs according to Claim 1 are used.

8. Materials containing amide groups, dyed with dyestuffs of Claims 1-6.

**Revendications**

1. Complexes de cobalt, de chrome, de fer, de cuivre et de nickel de colorants azoïques qui, sous l'une de leurs formes tautomères, répondent à la formule

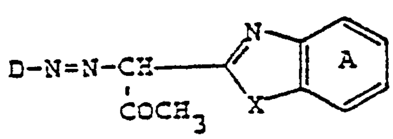

dans laquèlle

D désigne le reste d'un composant diazotable de la série du benzène ou du napthalène, qui est éventuellement substitué par un substituant alkyle, alkoxy, halogéno, $NO_2$, COOR, $CONR_2$, CN, $SO_3H$, $SO_2NR_2$, alkylsulfonyle ou arylsulfonyle et qui présente un groupe de complexation de métal en position voisine par rapport au groupe azo,

X désigne l'oxygène, le soufre ou le reste NR,

R désigne l'hydrogène ou un groupe alkyle, aryle, aralkyle, cycloalkyle, et le noyau

A peut porter des substituants classiques

dans la chimie des colorants azoïques.

2. Colorants azoïques suivant la revendication 1, portant un reste D de la série du benzène ou du naphtalène.

3. Complexe métallique de colorants azoïques suivant la revendication 1, de formule

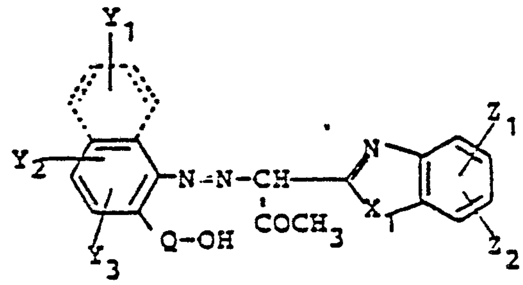

dans laquelle

$X_1$ désigne le soufre ou un groupe NR',

Q est un groupe CO ou une liaison directe,

$Y_1$ désigne l'hydrogène, le chlore, un groupe $NO_2$ ou $SO_3H$,

$Y_2$ représente l'hydrogène, un groupe nitro ou le chlore,

$Y_3$ représente l'hydrogène, un groupe nitro, le chlore, un groupe alkyle, alkoxy, $SO_3H$, alkylsulfonyle, arylsulfonyle ou $SO_2NW_1W_2$,

$W_1$ et $W_2$ représentent l'hydrogène ou un groupe alkyle,

$Z_1$ est l'hydrogène, un groupe alkyle, alkoxy, Cl, Br, un groupe $NO_2$, SCN, $SO_3H$, CN, alkylsulfonyle, arylsulfonyle, $SO_2NW_1NW_2$ ou $COOW_1$,

$Z_2$ est l'hydrogène, un groupe alkyle, alkoxy, Cl ou Br et

R' est l'hydrogène ou un groupe alkyle, aralkyle ou aryle.

4. Complexe métallique de colorants azoïques suivant la revendication 3, dans lequel

$X_1$ désigne le soufre,

Q est un groupe CO ou une liaison directe,

$Y_1$ est l'hydrogène, $NO_2$ ou $SO_3H$,

$Y_2$ est l'hydrogène, $NO_2$ ou Cl,

$Y_3$ est l'hydrogène, $NO_2$, Cl, $CH_3$, $OCH_3$, $SO_3H$, un groupe (alkyle en $C_1$ ou $C_2$)-sulfonyle ou $SO_2NW_1'W_2'$,

$W_1'/W_2'$ est l'hydrogène ou un groupe alkyle en $C_1$ à $C_4$,

$Z_1$ désigne l'hydrogène, $CH_3$, $OCH_3$, Cl, Br, $NO_2$, SCN, $SO_3H$, un groupe (alkyle en $C_1$ ou $C_2$)-sulfonyle ou COO-(alkyle en $C_1$ ou $C_2$),

$Z_2$ représente l'hydrogène, $CH_3$, Cl ou Br,

sous réserve que $Y_1$ à $Y_3$ et $Z_1$ ne représentent pas en même temps un groupe nitro.

5. Complexe métallique de formule

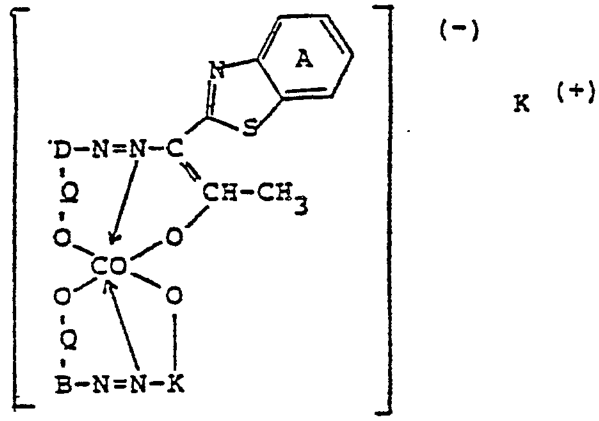

dans laquelle

A, D et Q ont la définition indiquée ci-dessus,

$K^{(+)}$ représente un cation, de préférence un cation alcalin, ammonium ou (alkyle inférieur)-ammonium,

B est le reste d'un composé diazotable, notamment de la série du benzène ou du napthalène et

K désigne un copulant différent du copulant utilisé ci-dessus, notamment un copulant de la série acétylacétarylide, pyrazole, 6-hydroxy-2-pyridone et naphtol.

le reste -Q-OH se trouvant en position ortho par rapport au pont azo.

6. Complexe métallique du colorant azoïque de formule

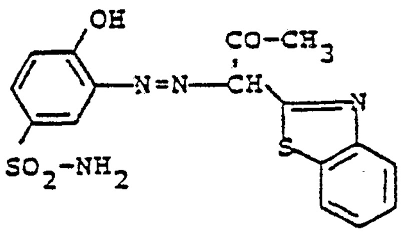

notamment son complexe de cobalt à 1 : 2.

7. Procédé de teinture de matières portant des groupes amide, caractérisé en ce qu'on utilise des colorants suivant la revendication 1.

8. Des matières portant des groupes amide teintes avec les colorants suivant les revendications 1 à 6.